# FASCICULE DE BREVET EUROPEEN

(11) **EP 3 044 378 B1**
(45) Date de publication et mention de la délivrance du brevet: **17.01.2018**
(21) Numéro de dépôt: 14777713.0
(22) Date de dépôt: 05.09.2014
(51) Int. Cl.: E02D 29/02, F16G 15/06

(54) **SYSTEME D'ATTACHE SUR ANCRAGE GEOTECHNIQUE ET ENSEMBLE DE RENFORT UTILISANT UNE TELLE ATTACHE.**
FIXIERSYSTEM FÜR GEOTECHNISCHE ANKER UND BEWEHRUNGSANORDNUNG MIT SOLCHEM FIXIERSYSTEM
ATTACHMENT SYSTEM ON A GEOTECHNICAL ANCHOR AND REINFORCING ASSEMBLY USING SUCH AN ATTACHMENT

(30) Priorité: 09.09.2013 FR 1358612
(43) Date de publication de la demande: 20.07.2016
(73) Titulaire: Soletanche Freyssinet, 92500 Rueil Malmaison (FR)
(72) Inventeur: GAUCHERAND, Cyril, F-69650 St Germain au Mont d'Or (FR); LECIGNE, Julien, Leesburg, VA 20176 (US); FAYARD, Rémy, F-71220 Saint-Bonnet-de-Joux (FR)
(74) Mandataire: Cabinet Plasseraud
(86) Numéro de dépôt international: PCT/FR2014/052195
(87) Numéro de publication internationale: WO 2015/033072

(56) Documents cités:
- WO-A2-2011/126267
- CH-B1- 701 928
- FR-A1- 2 913 035

## Description

La présente invention concerne la construction d'ouvrages de génie civil faisant appel à des techniques de remblais renforcés. Plus particulièrement, l'invention vise les systèmes d'attache sur des clous géotechniques ou autres éléments d'ancrages et les structures de renfort associées utilisant de tels systèmes d'attache. De tels systèmes d'attache et de structures de renfort sont connus des documents FR2913035 et CH701928B1. Les ouvrages concernés par l'invention peuvent avoir des usages variés comme par exemple élargir des voies de circulation, étendre un espace constructible, prévenir la détérioration, l'érosion ou la chute de pierres de murs ou de parois rocheuses, ou encore créer un massif architectural esthétique. Ils comprennent de façon générale un remblai placé contre le massif ou la structure de sol supportant la voie de circulation ou l'espace constructible à étendre ou encore le massif dont la surface se détériore. La paroi verticale de l'ouvrage à l'avant de ce remblai est formée par un parement connecté au massif, qui peut être préexistant, au moyen d'un ensemble de renfort dont il est question ci-après.

Il faut noter que le massif de type préexistant peut avoir des caractéristiques géométriques régulières ou irrégulières. De même, il faut noter que le massif en question peut être un massif érigé par construction, pas forcément préexistant, pour lequel on peut utiliser lorsque cela est possible des tirants traversants à la place de clous géotechniques classiques.

Dans l'art connu, il est classique d'utiliser des clous géotechniques comme moyen d'ancrage dans le massif ou structure de sol préexistante ; en pratique, on fore le massif préexistant pour y insérer un clou géotechnique (une tige métallique longue) et on scelle le clou au moyen d'un matériau de scellement injecté dans le forage autour du clou. On prend soin de laisser dépasser à l'extérieur une extrémité du clou ; cette extrémité est habituellement filetée (mais pas nécessairement).

Ensuite, selon une première solution, on place sur l'extrémité saillante filetée un écrou à anneau (écrou à oeil) muni d'un filetage intérieur ; on visse cet écrou à anneau sur l'extrémité filetée du clou géotechnique. Puis on fait passer dans cet anneau fermé une manille standard (de type levage) permettant de faire la connexion avec une armature de renfort, c'est-à-dire un câble métallique ou une bande synthétique renforcée, ou tout autre type d'armatures, cette armature de renfort étant reliée directement ou indirectement au parement de l'ouvrage que l'on vient d'ériger. On apporte aussi du matériau de remblai pour remblayer l'espace délimité par le massif préexistant et le parement érigé.

Toutefois, il s'avère que l'utilisation des écrous à anneau (écrous à oeil) soulève certains inconvénients. Tout d'abord, il est nécessaire d'utiliser des écrous à anneau parfaitement compatibles avec l'extrémité filetée du clou, ce qui en pratique impose d'acheter l'écrou à anneau chez le même fabriquant que le clou géotechnique car un tel écrou à anneau n'est pas une pièce standard. Pour finir, il peut s'avérer difficile, une fois que les manilles de connexion avec les armatures de renfort sont en place, de vérifier visuellement que le filetage du clou est complètement engagé, c'est-à-dire que l'extrémité du clou affleure ou dépasse à l'intérieur de l'anneau ou tout au moins qu'une longueur suffisante de filetage est engagée, ou que la vis de la manille de connexion est bien vissée ; or, il est souhaitable d'opérer un contrôle qualité pour s'assurer de la sécurité de l'ouvrage construit avant de combler avec du matériau de remblai.

De plus, selon cette première solution connue, le montage est long à réaliser et comme le filetage du clou a un pas fin, il est fréquent que des particules ou grains de sable s'insèrent dans le filetage du clou et cela peut gêner le vissage de l'écrou.

Selon une deuxième solution connue, on soude un barreau transversal métallique sur l'extrémité du clou de façon en former une forme en T, puis on passe les armatures de renfort autour du barreau transversal avant de les mettre en tension. Cependant, la réalisation de soudure sur chantier ne permet de garantir un niveau de qualité toujours constant, et de plus une telle soudure est sujette à corrosion dans le temps.

Un but de la présente invention est de pallier au moins en partie les inconvénients mentionnés ci-dessus.

L'invention propose ainsi un ensemble de renfort pour ouvrage de construction, érigé devant un massif, l'ouvrage de construction comprenant un parement dressé devant le massif, l'ensemble de renfort comprenant :
- au moins un élément formant ancrage, ancré dans le massif avec une portion d'extrémité saillante à l'extérieur du massif, centrée sur un axe A,
- au moins un élément d'attache assemblé sur la portion d'extrémité de l'élément formant ancrage,
- au moins une première manille montée sur l'extrémité de l'élément formant ancrage derrière l'élément d'attache, la première manille comportant des premier et second yeux ayant chacun un orifice centré sur l'axe A traversé par l'élément formant ancrage, les deux yeux étant reliés entre eux par un corps en forme générale recourbée,
- une armature de renfort passant au travers de l'évidement délimité par le corps recourbé de la manille et l'élément formant ancrage, configurée pour être relié directement ou indirectement au parement de l'ouvrage.

L'élément formant ancrage pourra être typiquement, mais pas exclusivement, un clou géotechnique. L'élément d'attache pourra être typiquement, mais pas exclusivement, un écrou, dit écrou de traction, vissé sur une portion filetée d'extrémité de l'élément formant ancrage.

Moyennant quoi seul l'élément d'attache doit être parfaitement compatible avec l'extrémité de l'élément formant ancrage alors que la manille peut avoir des caractéristiques géométriques dans une certaine mesure indépendantes de celles de l'élément formant ancrage et de l'élément d'attache et peut avoir en outre des caractéristiques de matière différente de celle de l'élément d'attache.

Dans le cas particulier de l'extrémité filetée et de l'écrou de traction, seul l'écrou de traction doit être parfaitement compatible avec le filetage de l'élément formant ancrage, alors que la manille peut avoir des caractéristiques géométriques dans une certaine mesure indépendantes de celles de l'élément formant ancrage et de l'écrou de traction. On peut aussi dans ce cas choisir un pas de filet plus large, et l'écrou de traction peut être une pièce tout-à-fait standard.

Dans des modes de réalisation préférés de l'ouvrage selon l'invention on peut avoir les caractéristiques suivantes prises seules ou en combinaison:
- l'extrémité de l'élément formant ancrage est filetée, et l'élément d'attache est un écrou de traction ; ce qui est une solution simple et très courante pour fournir un moyen de maintien de la manille ;
- le corps de la manille peut avoir une forme générale semi-circulaire ; de sorte que la configuration géométrique confère une très bonne robustesse à la manille et celle-ci peut supporter des efforts très conséquents, car le porte-à-faux reste très limité ;
- la première manille peut pivoter autour de l'axe A, indépendamment de l'élément d'attache; de sorte que lors de la mise en tension de l'armature de renfort, la manille se positionne toute seule selon la direction de l'effort de traction, ce qui n'est pas toujours le cas en cas d'utilisation d'écrou à anneau ;
- la première manille est symétrique par rapport à un plan médian P perpendiculaire à l'axe A ; de sorte que la manille peut être montée indifféremment sur l'élément formant ancrage dans les deux positions possibles, donc sans risque d'erreur ;
- l'ensemble de renfort peut comporter en outre un écrou d'arrêt placé sur le clou en arrière de la manille ; on peut éviter ainsi que la manille ne recule avant la mise en tension ;
- l'ensemble de renfort peut comporter en outre au moins une deuxième manille de structure similaire ou identique à la première manille, avec des premier et second yeux ayant chacun un orifice centré sur l'axe A, l'un de ces yeux étant agencé sensiblement sans jeu axial entre les premier et second yeux de la première manille ; moyennant quoi les efforts de traction exercés sur les armatures de renfort sont repris par l'empilage axial des quatre yeux qui portent sur l'écrou de traction ; La présence de la seconde manille renforce ainsi la reprise d'effort admise sur la première manille, ou tout le moins limite sa déformation.
- la première manille et la seconde manille peuvent être décalées angulairement autour de l'axe A ; de sorte que l'on peut facilement répartir plusieurs armatures de renfort autour de l'élément formant ancrage;
- l'élément d'attache peut être un écrou à portée sphérique ; ce qui permet de s'adapter à un désaxement de la manille et de conserver une surface de contact suffisamment étendue en répartissant les efforts ;
- l'écrou de traction peut être de couleur différente de l'élément formant ancrage; ce qui facilite la vérification visuelle de la bonne position de l'écrou de traction ;
- l'élément formant ancrage peut être un clou géotechnique scellé dans le massif ; ce qui est une solution très utilisée dans le cas de massifs épais préexistants.

L'invention concerne aussi une manille convenant pour être utilisée dans un ensemble de renfort pour ouvrage de construction, la manille comportant un premier oeil et un second oeil ayant chacun un orifice centré sur un axe A, les deux yeux étant reliés entre eux par un corps en forme générale semi-circulaire, les premier et second yeux ayant chacun une épaisseur axiale E2 et étant séparés axialement par une distance E1 (c'est-à-dire un intervalle) comprise entre E2 et 1,10 E2, de sorte que, entre les premier et second yeux, peut venir s'intercaler, avec un jeu minime ou nul, un oeil d'une autre manille similaire.
Moyennant quoi on peut aussi intercaler l'oeil d'une telle manille entre les deux yeux d'une autre telle manille, et ceci sans jeu substantiel, de manière à avoir deux manilles entrelacées.
Selon des caractéristiques optionnelles, on peut avoir en outre pour la manille :
- le corps semi-circulaire présente une section de diamètre **D3** qui vérifie la relation 0,75 E2 < D3 < E2 ; de sorte qu'on obtient un optimum entre la taille de l'évidement délimité par le corps recourbée 53 de la manille et le clou et la robustesse mécanique de la manille.
- chacun des yeux peut présenter un diamètre extérieur radial D2 avec le rapport D2/D1 compris entre 1,5 et 2,5 ; moyennant quoi la reprise des efforts de traction et de flexion est bien répartie dans la zone de l'oeil, cette dernière présentant une robustesse satisfaisante.
- la manille peut être symétrique par rapport à un plan médian P perpendiculaire à l'axe A, et l'orifice de chaque oeil peut présenter une section tronconique s'évasant dans une direction dirigée à l'opposé du plan P ; ainsi, même si la manille se désaxe sur l'extrémité du clou ayant un diamètre plus faible, la surface de portée reste assez large et les efforts non concentrés.
- chacun des yeux présente une bordure de section axiale conique (en forme de chanfrein) entre la section tronconique et la face latérale dirigé vers l'élément d'attache; de sorte que dans le cas d'utilisation d'un écrou de traction à portée sphérique et d'un clou ayant un diamètre plus faible, la portée sur l'écrou de traction se répartit au moins sur un cercle et l'effort n'est pas concentré.

Un autre aspect de l'invention se rapporte à un **procédé** de construction d'un ouvrage devant un massif, dans lequel on assemble un ensemble de renfort tel que décrit précédemment, le procédé comprenant les étapes suivantes :
- insérer un élément formant ancrage dans le massif,
- optionnellement placer un écrou d'arrêt sur la partie saillante de l'élément formant ancrage,
- passer au moins une armature de renfort dans l'évidement d'une manille telle que décrite plus haut et ensuite enfiler les deux yeux de ladite manille, avec l'armature de renfort ainsi agencée, sur l'extrémité de l'élément formant ancrage,
- visser un élément d'attache sur l'extrémité de l'élément formant ancrage,

De façon préférée, l'élément d'attache pourra être typiquement, mais pas exclusivement, un écrou, dit écrou de traction, vissé sur une portion filetée de l'extrémité de l'élément formant ancrage.

On obtient ainsi un procédé particulièrement simple et fiable ce qui permet d'éviter tout problème de non-qualité dans l'assemblage de l'ensemble de renfort.

D'autres particularités et avantages de la présente invention apparaîtront dans la description ci-après d'exemples de réalisation non limitatifs, en référence aux dessins annexés, dans lesquels :
- la figure 1 est une vue schématique en coupe latérale d'un exemple d'ouvrage utilisant un ensemble de renfort selon l'invention ;
- la figure 2 est une vue en perspective du système d'attache utilisé dans un ensemble de renfort de l'ouvrage de la figure 1 ;
- la figure 3 est une vue en perspective de la manille utilisée dans le système d'attache pour l'ouvrage de la figure 1 ;
- la figure 4 est une vue en coupe du système d'attache selon une configuration à deux manilles entrelacées,
- la figure 5 est une vue en bout de la configuration illustrée à la figure 4,
- la figure 6 est une vue détaillée en coupe de la manille,
- la figure 7 est une vue analogue à la figure 2 avec un clou de plus petit diamètre et un écrou de traction à portée sphérique,
- la figure 8 montre une variante de la figure 1, illustrant un mode de réalisation avec des tirants traversant le massif.

Pour des raisons de clarté, les dimensions des différents éléments représentés dans ces figures ne sont pas en proportion avec leurs dimensions réelles. Par ailleurs, sur toutes les figures, des références identiques correspondent à des éléments identiques.

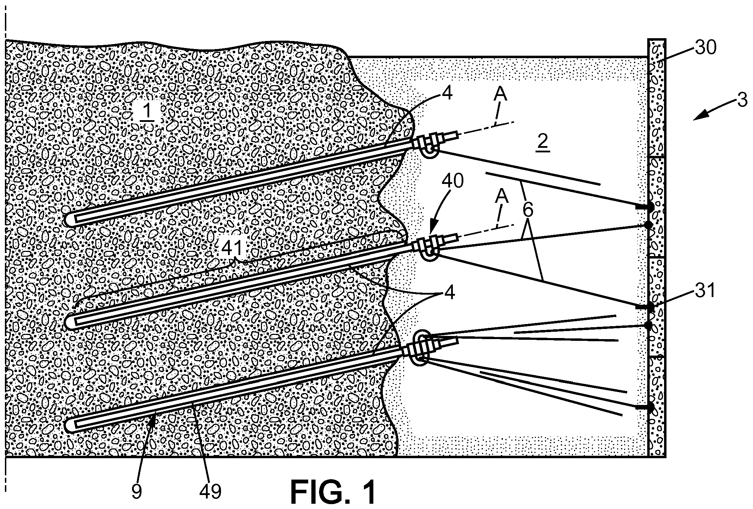

Les figures 1 à 7 illustrent un premier exemple d'application, non limitative, de l'invention à la construction d'un ouvrage de renforcement.

Le massif préexistant 1 présente une paroi de profil plus ou moins régulier sur son côté avant ; ce massif préexistant est destiné à servir de structure support à l'ouvrage et notamment à l'ensemble de renfort qui va être décrit dans la suite, moyennant l'installation de clous géotechniques, connus en soi.

Un tel clou géotechnique **4** se présente comme une tige ronde allongée, fabriquée en métal résistant comme un acier ou un alliage à haute limite élastique. La majeure partie **41** de ce clou est insérée dans un trou **9** que l'on a préalablement foré dans le massif 1, mais on laisse dépasser une extrémité **40** à l'extérieur du massif. Après positionnement du clou dans sa position souhaitée, on injecte un matériau de scellement **49** dans le trou autour du clou sur une certaine longueur. Lorsque le matériau de scellement **49** a durci, le clou forme un ancrage très solide dans le massif en particulier dans le sens longitudinal, c'est-à-dire selon l'axe **A** le long duquel s'étend le clou.

L'extrémité **40** est filetée dans l'exemple illustré, de préférence selon un pas standard. Toutefois, on peut prévoir un autre système de fixation qu'une relation vis-écrou, comme cela sera indiqué plus loin.

La face avant de l'ouvrage érigé comporte un parement **3,** par exemple composé d'éléments préfabriqués juxtaposés **30** en béton armé, le plus souvent ce sont des plaques rectangulaires superposées sur la tranche.

On dispose des armatures de renfort **6** pour maintenir le parement **3** par rapport au massif **1.**

Dans l'exemple représenté, les armatures de renfort 6 sont des éléments linéaires tels que des armatures en acier laminé, ou les éléments en deux dimensions comme des échelles ou treillis, ou encore des bandes géotextiles, de nombreuses solutions sont connues de l'homme du métier, certaines se retrouvent par exemple dans les documents FR2921943, FR2913035 ou FR2860811, ces références n'étant pas limitatives.

Dans l'exemple illustré, un remblai compacté **2** comble l'intervalle entre le parement **3** et la paroi formée par le côté avant du massif **1**. Il n'est toutefois pas exclu de laisser les armatures de renfort à l'air libre quand celles-ci sont des tirants directs en recouvrant simplement le haut de l'ouvrage avec un toit pour les protéger des intempéries.

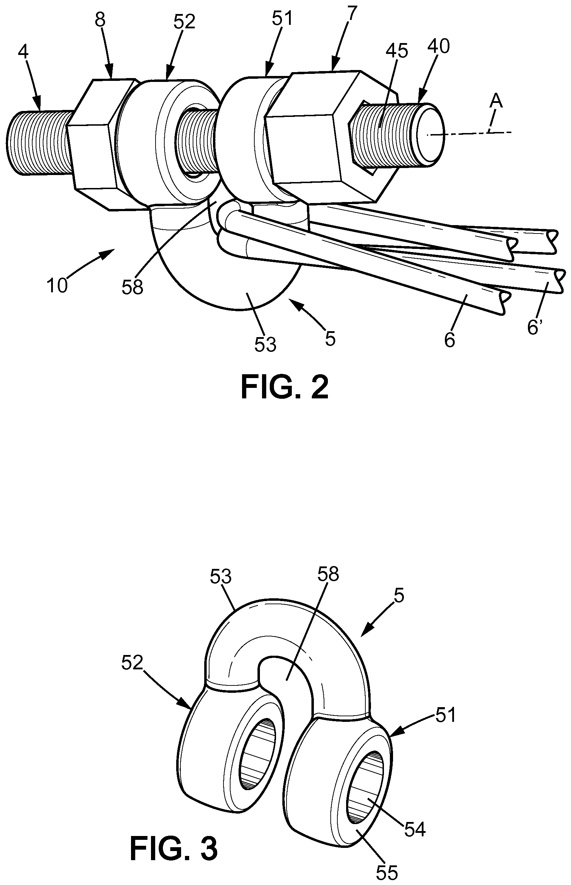

En référence aux figures 1 et 2, des armatures de renfort **6** sont ensevelies dans le remblai **2,** le remblai permettant de transmettre les efforts entre le massif et le parement en particulier lorsque l'on utilise des bandes géotextiles à friction placées les unes à proximité des autres, auquel cas le remblai compacté qui participe à la transmission des efforts de maintien de l'ouvrage, par interaction entre les bandes de renforts et le remblai lui-même.

Les points d'attache **31** au parement peuvent prendre plusieurs formes, des formes en creux dans les plaques **30,** des boucles saillantes coulées à la préfabrication, ou tout autre moyen d'attache adéquat ; des exemples non limitatifs sont présentés dans les documents FR2878268 et FR2803610.

La liaison entre une armature de renfort **6** et le clou géotechnique **4** est réalisée avantageusement au moyen d'un système d'attache **10** qui va être décrit ci-après.

Au voisinage de l'extrémité du clou, on dispose une manille **5** de forme générale assez voisine de la forme des manilles de levage très courantes. En effet, la manille comporte un premier oeil **51** et un deuxième oeil **52** disposés coaxialement à distance l'un de l'autre. Chaque oeil comporte un orifice **54** centré sur l'axe **A** traversé par le clou.

Les deux yeux **51,52** sont reliés entre eux par un corps **53** en forme générale recourbée. Avantageusement ce corps est de forme semi-circulaire. La section principale de ce corps est ronde et présente un diamètre noté **D3.**

Un écrou de traction **7** est vissé sur le clou devant la manille. Le filetage intérieur de l'écrou de traction correspond au filetage extérieur **45** de l'extrémité du clou géotechnique ; en effet c'est cette interface filetée qui va reprendre les efforts de traction sur la manille, via la surface arrière **75** de l'écrou qui reçoit la poussée de la manille (ici sa face avant **55** qui porte à plat sur l'écrou).

Au lieu d'un écrou de traction, on pourra utiliser plus généralement tout élément d'attache adéquat comme une goupille ou clavette traversant un trou diamétral ménagé dans l'extrémité de la tige, ou encore une épingle ou un circlip venant s'insérer dans une ou plusieurs gorges agencées sur les zones latérales de la tige, ces configurations n'étant pas représentées aux figures mais pouvant tout-à-fait être mis en oeuvre dans le cadre de la présente invention.

L'armature de renfort (ou les armatures de renfort s'il y en a plus d'une) est insérée dans l'évidement intérieur **58** du corps délimité par le corps recourbé **53** et le clou **4**.

La manille **5** pivote autour de l'axe **A** lorsque l'armature de renfort **6** est mise en tension, de manière à se mettre en ligne avec la ligne de traction de l'armature **6** ; on peut désigner cet effet l'effet de 'rotulation'. Même si la ligne de traction s'écarte peu de l'axe **A**, il n'y a pas de frein à la mise en ligne.

On obtient ainsi un système d'attache **10** particulièrement simple ; la manille peut être approvisionnée indépendamment du clou et de l'écrou de traction ; ladite manille peut être un élément standard utilisable dans plusieurs configurations différentes de systèmes d'attache tels que décrits ci-dessus.

Le pas de filetage du clou et de l'écrou de traction peut être relativement large, ce qui évite certains problèmes de pollution par des matériaux tels que le sable.

Il faut noter que, optionnellement, un écrou d'arrêt **8** peut être agencé en arrière de la manille, cet écrou d'arrêt aura dû être mis en position avant l'insertion de la manille, cet écrou d'arrêt définit une position arrière maximum pour la manille, en particulier avant la mise en tension de l'armature de renfort **6**. Cet écrou d'arrêt ne supporte pas d'effort important, il peut être plus fin que l'écrou de traction ; il peut éventuellement être remplacé par une solution alternative à base d'un clip (pince) venant s'accrocher sur le filetage.

Le diamètre intérieur **D1** des orifices 54 des yeux doit être supérieur au diamètre extérieur **D0** de la portion d'extrémité **40** du clou **4.** Le jeu entre le clou et les yeux de la manille (D1-D0) peut être plus ou moins important, ceci sera illustré plus loin.

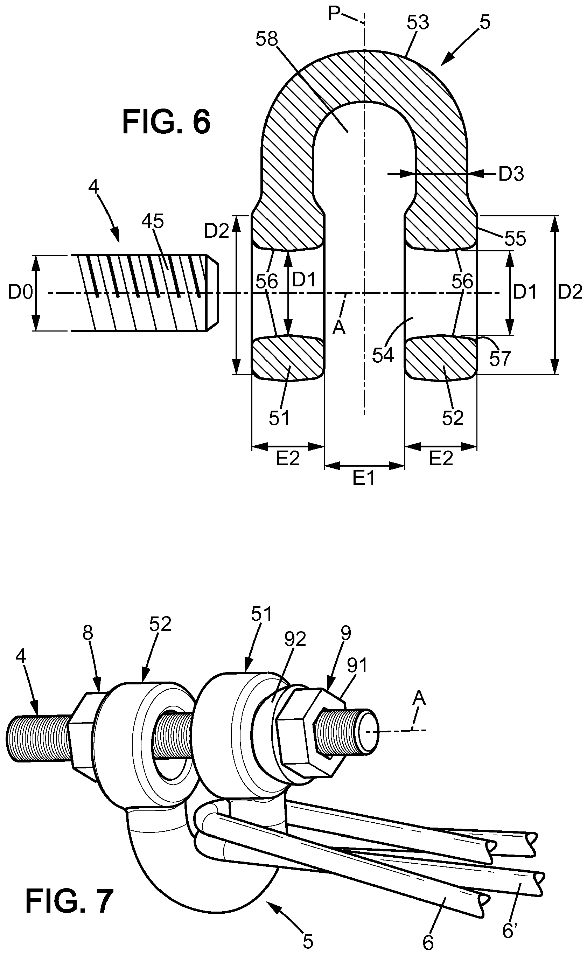

En référence aux figures 2 et 6, la manille présente des caractéristiques géométriques avantageuses. Tout d'abord, la manille peut être avantageusement symétrique par rapport à un plan médian noté **P** perpendiculaire à l'axe A et situé à équidistance des yeux **51,52.**

De plus, bien que les orifices puissent être des alésages cylindriques, chaque orifice **54** des premier et second yeux peut ne pas être strictement cylindrique ; en effet, il est prévu une section tronconique **56** s'évasant vers l'extérieur de la manille dans une direction dirigée à l'opposé du plan médian **P**. Ainsi, lorsque la manille est mise en traction par des armatures de renfort, si il y a du jeu entre l'orifice 54 et le clou, alors la manille se désaxe, c'est-à-dire autrement dit se met légèrement de biais, alors la portion tronconique porte sur le filetage ce qui permet de mieux répartir les efforts que dans le cas d'une forme cylindrique où seule la bordure porterait sur les filets.

De plus, la bordure extérieure **57** de l'orifice 54 peut être une bordure conique, formant un chanfrein, dont l'utilité sera vue plus loin.

En outre, les premier et second yeux 51,52 ont chacun une épaisseur axiale **E2,** qui représente leur dimension maximum dans le sens de l'axe **A.** Les premier et second yeux **51,52** sont séparés axialement par une distance E1, appelé intervalle intérieur. Cette distance **E1** est comprise avantageusement entre **E2 et 1,10 E2** (110% de E2), voire comprise avantageusement entre **E2 et 1,05 E2** (105% de E2), pour une raison qui sera explicitée ci-après. Toutefois pour le cas d'une utilisation simple représentée à la figure 2, cette condition n'est pas strictement nécessaire et la distance **E1** pourrait être différente. De même on pourrait avoir des épaisseurs axiales des deux yeux différentes.

La section de diamètre **D3** susmentionnée du corps semi-circulaire **53** est légèrement inférieure dans l'exemple illustré à l'épaisseur axiale **E2** des yeux. Une optimisation de la forme de la manille pour obtenir un évidement **58** assez grand tout en conservant une très bonne robustesse est tel que **D3** vérifie la relation **0,75 E2 < D3 < E2.**

Chacun des yeux présente un diamètre extérieur radial noté **D2** et le rapport **D2/D1** est avantageusement compris entre 1,5 et 2,5 pour optimiser la robustesse de la manille et sa tenue aux efforts de traction et de flexion avec porte-à-faux.

La matière de la manille est un acier à basse teneur de silicium et phosphore de manière à faciliter l'application d'un procédé de galvanisation.

En effet, on prévoit que la manille soit protégée de la corrosion pour toute la durée de service et quelle que soit la nature des sols et des liquides plus ou moins agressifs qui peuvent se trouver dans l'environnement du système d'attache et de la manille.

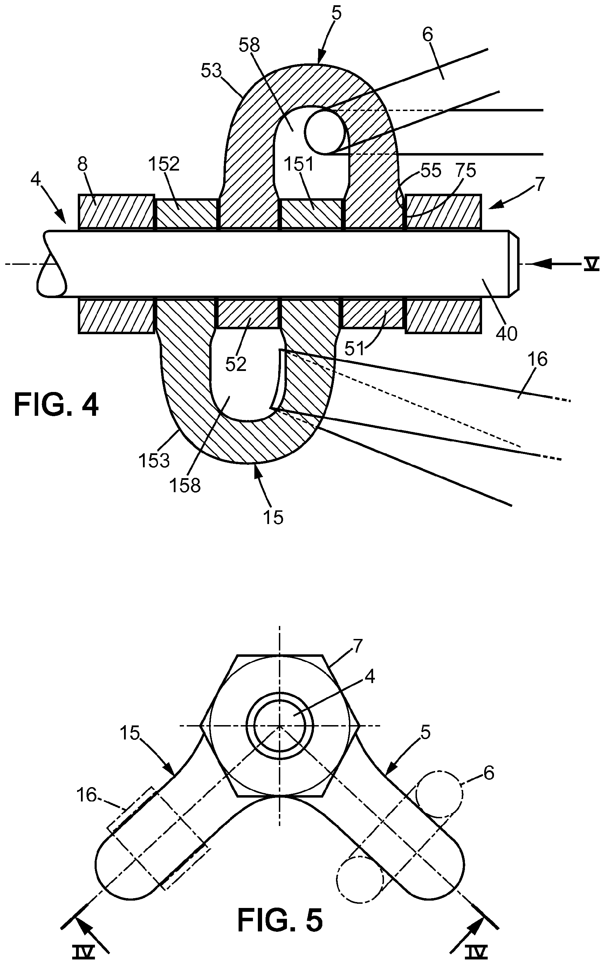

Les figures 4 et 5 montrent un assemblage à deux manilles entrelacées, ce qui permet d'augmenter le nombre d'armatures de renfort attachées sur le clou géotechnique **4.**

En effet, on dispose non seulement une première manille **5** telle que décrite précédemment, mais également une seconde manille **15** similaire ou identique à la première. Cette seconde manille comprend un premier oeil **151** et un second oeil **152.** Le premier oeil **151** est interposé (ou intercalé) entre les deux yeux **51,52** de la première manille. L'écrou d'arrêt optionnel 8 se retrouve dans cette configuration derrière le deuxième oeil **152** de la deuxième manille.

Selon cet agencement, avec la condition supplémentaire **E2** substantiellement égale à **E1** (E1 entre 100% et 105% voire 110% de E2), les quatre yeux des première et seconde manilles sont adjacents les uns aux autres et forment ensemble un empilement axial en appui sur l'écrou de traction **7** lorsque les armatures de renfort sont en tension, chacun des quatre yeux s'appuyant contre le suivant (empilage en série)

Comme présenté à la figure 4, un fil métallique 6 d'armature passe au travers de l'évidement **58** de la première manille ; il pouvait y avoir entre le deuxième fil **6'** dans le même évidement (cf Fig 2 et 7).

Une armature sous forme de bande géotextile **16** passe au travers de l'évidement intérieur **158** formé par le corps recourbé **153** de la deuxième manille **15.** Il n'est pas exclu d'avoir plusieurs bandes géotextiles arrangée les unes au-dessus des autres et passant dans l'évidement **158** de la manille.

On remarque sur la figure 5 un décalage angulaire autour de l'axe **A** entre les deux manilles, ce qui permet d'attacher plusieurs armatures de renfort sur un seul clou **4** sans que les armatures de renfort n'interfèrent entre elles. Le décalage angulaire peut être plus ou moins important selon la position des armatures dans le remblai **2.**

Il faut remarquer qu'on pourrait avoir plus de deux manilles entrelacées par exemple trois ou quatre à la condition que **E1** soit respectivement égale à sensiblement trois ou quatre fois **E2.**

La figure 7 illustre l'exemple où le diamètre du clou est substantiellement inférieur au diamètre des orifices **54** des yeux de la manille.

On utilise un écrou à portée sphérique qui présente en plus de la portion hexagonale classique **91** filetée une portion sphérique **92** centrée sur l'axe.

Dans ce cas de figure, dès qu'une traction est exercée par l'armature de renfort **6,6',** la manille **5** non seulement pivote autour de l'axe mais se met en biais en raison du jeu **D1-D0.** Mais la bordure conique **57** vient porter sur la portion sphérique **92** sans créer de point de concentration de contraintes et en répartissant convenablement les contraintes sur le pourtour de l'écrou de traction.

Par conséquent, une seule définition de manille peut convenir pour une multiplicité d'applications différentes avec des clous géotechniques de différentes provenances pour une gamme de diamètres de clous variés.

Avantageusement, on peut utiliser ce type de manille seule ou en couple entrelacé comme décrit plus haut. Une telle standardisation permet d'obtenir un coût de revient très performant.

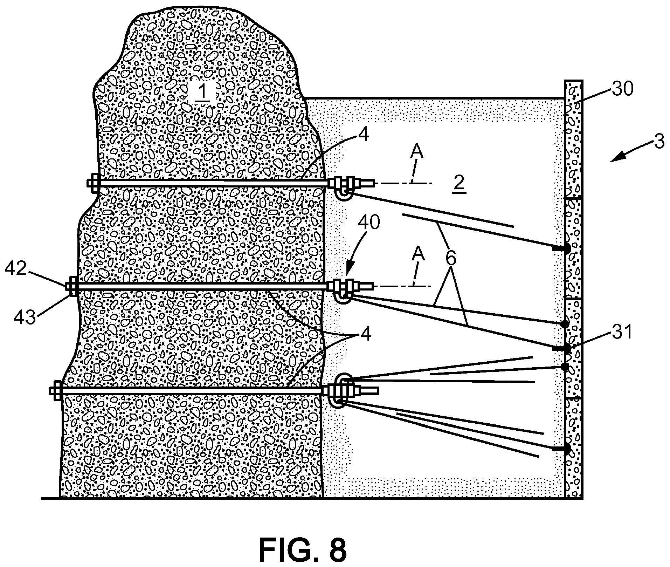

La figure 8 illustre un autre mode de réalisation dans lequel les éléments formant ancrage ne sont pas des clous géotechniques scellés, mais des tirants ancrés à leur extrémité **42** opposée de celle **40** où est agencée la manille.

Les tirants en question sont des tiges métalliques cylindriques que l'on place dans des trous 9, forés de part en part dans le massif 1. À l'extrémité opposée 42, on peut placer un écrou d'ancrage **43** ou souder un élément transversal **43,** ou tout autre élément permettant d'ancrer l'extrémité opposée **42** par rapport au massif un chiffre.

L'extrémité avant **40** du tirant **4** est analogue ou similaire à ce qui a été décrit pour le mode de réalisation des figures 1 à 7, ainsi que le système d'attache avec les manilles tel que précédemment décrit.

Il faut noter que le massif **1** représenté peut être un massif préexistant ou un massif construit, érigé préalablement ou en même temps que le parement 3.

## Revendications

1. Ensemble de renfort pour ouvrage de construction érigé devant un massif (1), l'ouvrage de construction comprenant un parement (3) dressé devant le massif, le parement étant destiné à être relié au massif par l'ensemble de renfort, l'ensemble de renfort comprenant :
- au moins un élément formant ancrage (4) ancré dans le massif avec une portion d'extrémité (40) saillante à l'extérieur du massif, centrée sur un axe A,
- au moins un élément d'attache (7) assemblé sur la portion d'extrémité de l'élément formant ancrage,
- au moins une première manille (5) montée sur l'extrémité de l'élément formant ancrage derrière l'élément d'attache, l'ensemble de renfort étant caractérisé en ce quela première manille comportant des premier et second yeux (51,52) ayant chacun un orifice (54) centré sur l'axe A traversé par l'élément formant ancrage, les deux yeux étant reliés entre eux par un corps (53) en forme générale recourbée, et en ce qu'il comporte
- une armature de renfort (6) passant au travers de l'évidement (58) délimité par le corps recourbé (53) de la manille et l'élément formant ancrage, configurée pour être relié directement ou indirectement au parement de l'ouvrage.

2. Ensemble de renfort selon la revendication 1, dans lequel l'extrémité (40) de l'élément formant ancrage est filetée, et dans lequel l'élément d'attache est un écrou de traction (7), vissé sur une portion d'extrémité filetée.

3. Ensemble de renfort selon l'une des revendications 1-2, dans lequel le corps (53) a une forme générale semi-circulaire.

4. Ensemble de renfort selon l'une des revendications 1-3, dans laquelle la première manille (5) peut pivoter autour de l'axe A, indépendamment de l'élément d'attache.

5. Ensemble de renfort selon l'une des revendications 1-4, dans laquelle la première manille (5) est symétrique par rapport à un plan médian P perpendiculaire à l'axe A.

6. Ensemble de renfort selon l'une des revendications 1-5, comportant en outre un écrou d'arrêt (8) placé sur l'élément formant ancrage en arrière de la manille.

7. Ensemble de renfort selon l'une des revendications 1-6, comprenant en outre au moins une deuxième manille (15) de structure similaire identique à la première manille, avec des premier et second yeux (151,152) ayant chacun un orifice centré sur l'axe A, l'un de ces yeux étant agencé sensiblement sans jeu axial entre les premier et second yeux (51,52) de la première manille (5).

8. Ensemble de renfort selon la revendication 7, dans lequel la première manille (5) et la seconde manille (15) sont décalées angulairement autour de l'axe A.

9. Ensemble de renfort selon l'une des revendications 1-8, dans lequel l'élément d'attache (7) est un écrou à portée sphérique.

10. Ensemble de renfort selon l'une des revendications 1-9, dans lequel l'élément formant ancrage est un clou géotechnique scellé dans le massif.

11. **Manille** convenant pour être utilisée dans un ensemble de renfort pour ouvrage de construction, la manille comportant un premier oeil (51) et un second oeil (52) ayant chacun un orifice centré sur un axe A, les deux yeux étant reliés entre eux par un corps (53) en forme générale semi-circulaire, les premier et second yeux (51,52) ayant chacun une épaisseur axiale E2 prise selon la direction de l'axe A, **caractérisé en ce que** les premier et second yeux (51,52) sont séparés axialement par une distance E1 comprise entre E2 et 1,10 E2, de sorte que, entre les premier et second yeux, peut venir s'intercaler, avec un jeu minime ou nul, un oeil d'une autre manille similaire.

12. Manille selon la revendication précédente, dans laquelle le corps semi-circulaire (53) présente une section de diamètre D3 qui vérifie la relation 0,75 E2 < D3 < E2.

13. Manille selon l'une des revendications 11-12, dans laquelle chacun des yeux présente un diamètre extérieur radial D2 et le rapport D2/D1 est compris entre 1,5 *et 2,5.*

14. Manille selon l'une des revendications 11-13, étant symétrique par rapport à un plan médian P perpendiculaire à l'axe A, et dans laquelle l'orifice de chaque oeil présente une section tronconique (56) s'évasant dans une direction dirigée à l'opposé du plan P.

15. Manille selon l'une des revendications 11-14, dans laquelle chacun des yeux présente une bordure de section axiale conique (57) entre la section tronconique et la face latérale (45) dirigée vers l'élément d'attache.

16. **Procédé** de construction d'un ouvrage devant un massif, dans lequel on assemble un ensemble de renfort, le procédé comprenant les étapes suivantes :
- insérer un élément formant ancrage dans le massif, en laissant dépasser une portion d'extrémité (40) saillante,
- optionnellement placer un écrou d'arrêt (8) sur la portion d'extrémité saillante,
- passer au moins une armature de renfort (6) dans l'évidement d'une manille (5) selon l'une des revendications 11 à 15, ladite manille (5) comportant des premier et second yeux (51,52) reliés entre eux par un corps (53) en forme générale recourbée, et ensuite enfiler les deux yeux de ladite manille, avec l'armature de renfort ainsi agencée, sur l'extrémité de l'élément formant ancrage,
- assembler un élément d'attache (7) sur l'extrémité de l'élément formant ancrage.

17. Procédé selon la revendication précédente, dans lequel l'extrémité (40) de l'élément formant ancrage est filetée, et dans lequel l'élément d'attache est un écrou de traction (7), vissé sur une portion d'extrémité filetée.

## Patentansprüche

1. Bewehrungsanordnung für ein vor einem Massiv (1) errichtetes Bauwerk, wobei das Bauwerk eine vor dem Massiv angeordnete Verkleidung (3) aufweist, wobei die Verkleidung mit Hilfe der Bewehrungsanordnung mit dem Massiv verbunden werden soll, wobei die Bewehrungsanordnung aufweist:
- mindestens ein verankerungsbildendes Element (4), das in dem Massiv verankert ist und einen aus dem Massiv herausragenden Endabschnitt (40) hat, der auf eine Achse A zentriert ist,
- mindestens ein Fixierelement (7), das an dem Endabschnitt des verankerungsbildenden Elements (4) angebracht ist,
- mindestens einen ersten Schäkel (5), der an dem Ende des verankerungsbildenden Elements hinter dem Fixierelement angebracht ist,
wobei die Bewehrungsanordnung **dadurch gekennzeichnet ist, dass**
der erste Schäkel ein erstes und zweites Auge (51, 52) aufweist, von denen jedes eine auf die Achse A zentrierte Öffnung (54) hat, durch welche hindurch sich das verankerungsbildende Element erstreckt, wobei die zwei Augen mittels eines allgemein bogenförmigen Körpers (53) miteinander verbunden sind, und
dadurch, dass sie eine Verstärkungsarmatur (6) aufweist, die sich durch die von dem bogenförmigen Körper (53) des Schäkels und dem verankerungsbildenden Element gebildete Aussparung (58) hindurch erstreckt und konfiguriert ist, direkt oder indirekt mit der Verkleidung des Bauwerks verbunden zu werden.

2. Bewehrungsanordnung nach Anspruch 1, wobei das Ende (40) des verankerungsbildenden Elements mit Gewinde versehen ist und wobei das Fixierelement eine Zugschraubenmutter (7) ist, die auf einen Abschnitt des mit Gewinde versehenen Endes geschraubt ist.

3. Bewehrungsanordnung nach einem der Ansprüche 1 bis 2, wobei der Körper (53) allgemein halbkreisförmig ist.

4. Bewehrungsanordnung nach einem der Ansprüche 1 bis 3, wobei sich der erste Schäkel (5) unabhängig von dem Fixierelement um die Achse A drehen kann.

5. Bewehrungsanordnung nach einem der Ansprüche 1 bis 4, wobei der erste Schäkel (5) symmetrisch bezüglich einer zur Achse A senkrechten Mittelebene P ist.

6. Bewehrungsanordnung nach einem der Ansprüche 1 bis 5, ferner mit einer Anschlagschraubenmutter (8), die an dem verankerungsbildenden Element hinter dem Schäkel angeordnet ist.

7. Bewehrungsanordnung nach einem der Ansprüche 1 bis 6, ferner mit mindestens einem zweiten Schäkel (15), dessen Struktur gleich derjenigen des ersten Schäkels ist und der ein erstes und ein zweites Auge (151, 152) mit jeweils einer auf die Achse A zentrierten Öffnung aufweist, wobei das eine dieser Augen im Wesentlichen ohne axiales Spiel zwischen dem ersten und dem zweiten Auge (51, 52) des ersten Schäkels (5) angeordnet ist.

8. Bewehrungsanordnung nach Anspruch 7, wobei der erste Schäkel (5) und der zweite Schäkel (15) in versetztem Winkel um die Achse A herum angeordnet sind.

9. Bewehrungsanordnung nach einem der Ansprüche 1 bis 8, wobei das Fixierelement (7) eine Schraubenmutter mit einer kugeligen Auflagefläche ist.

10. Bewehrungsanordnung nach einem der Ansprüche 1 bis 9, wobei das verankerungsbildende Element ein in dem Massiv versiegelter geotechnischer Nagel ist.

11. Schäkel, der geeignet ist, um in einer Bewehrungsanordnung eines Bauwerks verwendet zu werden, wobei der Schäkel ein erstes Auge (51) und ein zweites Auge (52) aufweist, die jeweils eine auf eine Achse A zentrierte Öffnung haben, wobei die zwei Augen mittels eines allgemein halbkreisförmigen Körpers (53) miteinander verbunden sind, wobei das erste und das zweite Auge (51, 52) jeweils eine in Richtung der Achse A genommene axiale Dicke E2 haben, **dadurch gekennzeichnet, dass** das erste und das zweite Auge (51, 52) axial in einem Abstand E1, der zwischen E2 und 1,10 E2 beträgt, angeordnet sind, so dass zwischen dem ersten und dem zweiten Auge mit einem minimalen oder keinen Spiel ein Auge des anderen gleichartigen Schäkels zur Anordnung kommen kann.

12. Schäkel nach dem vorstehenden Anspruch, wobei der halbkreisförmige Körper (53) einen Querschnittdurchmesser D3 aufweist, der die Beziehung 0,75 E2 < D3 < E2 erfüllt.

13. Schäkel nach einem der Ansprüche 11 bis 12, wobei jedes der Augen einen radialen Außendurchmesser D2 hat und das Verhältnis D2/D1 zwischen 1,5 und 2,5 beträgt.

14. Schäkel nach einem der Ansprüche 11 bis 13, wobei der Schäkel symmetrisch bezüglich einer zur Achse A senkrechten Mittelebene P ist und wobei die Öffnung jedes Auges einen kegelstumpfförmigen Querschnitt (56) aufweist, der sich in einer von der Mittelebene P weg gerichteten Richtung vergrößert.

15. Schäkel nach einem der Ansprüche 11 bis 14, wobei jedes der Augen einen Rand (57) mit axialem konischem Querschnitt zwischen dem kegelstumpfförmigen Querschnitt und der dem Fixierelement zugewandten Seitenfläche (45) aufweist.

16. Verfahren für ein Bauwerk vor einem Massiv, in welchem eine Bewehrungsanordnung montiert wird, wobei das Verfahren die folgenden Schritte aufweist:
- Einsetzen eines verankerungsbildenden Elements in das Massiv, wobei ein vorspringender Endabschnitt (40) herausragend bleibt,
- optionales Anordnen einer Anschlagschraubenmutter (8) an dem vorspringenden Endabschnitt,
- Einführen mindestens einer Verstärkungsarmatur (6) in die Aussparung eines Schäkels (5) nach einem der Ansprüche 11 bis 15, wobei der Schäkel (5) ein erstes und ein zweites Auge (51, 52) aufweist, die mittels eines allgemein bogenförmigen Körpers (53) miteinander verbunden sind, und anschließendes Einfädeln der zwei Augen des Schäkels mit der daran angeordneten Verstärkungsarmatur auf das Ende des verankerungsbildenden Elements,
- Anbringen eines Fixierelements (7) an dem Ende des verankerungsbildenden Elements.

17. Verfahren nach dem vorstehenden Anspruch, wobei das Ende (40) des verankerungsbildenden Elements mit Gewinde versehen ist und wobei das Fixierelement eine Zugschraubenmutter (7) ist, die auf einen Abschnitt des mit Gewinde versehenen Endes geschraubt wird.

## Claims

1. Reinforcing assembly for a building construction, erected in front of a foundation (1), the building construction comprising a facing (3) erected in front of the foundation, the facing being intended to be connected to the foundation by the reinforcing assembly, the reinforcing assembly comprising:
- at least one **element (4) forming an anchoring,** anchored in the foundation with an end portion (40) projecting outside the foundation, centred on an axis A,
- at least one **attachment element** (7) assembled on the end portion of the element forming an anchor,
- at least one first **clevis** (5) mounted on the end of the element forming an anchor behind the attachment element,
the reinforcing assembly being **characterized in that** the first clevis comprising first and second eyes (51, 52) each having an orifice (54) centred on the axis A through which the element forming an anchor passes, the two eyes being connected together by a body (53) with a generally curved shape,
and **in that** it comprises :
- a **reinforcement** (6) passing through the recess (58) delimited by the curved body (53) of the clevis and the element forming an anchor, configured so as to be connected directly or indirectly to the facing of the structure.

2. Reinforcing assembly according to claim 1, in which the end (40) of the element forming an anchor is threaded, and in which the attachment element is a draw nut (7), screwed onto a threaded end portion.

3. Reinforcing assembly according to one of claims 1 to 2, in which the body (53) has a roughly semi-circular shape.

4. Reinforcing assembly according to one of claims 1 to 3, in which the first clevis (5) can pivot about the axis A, independently of the attachment element.

5. Reinforcing assembly according to one of claims 1 to 4, in which the first clevis (5) is symmetrical with respect to a midplane P perpendicular to the axis A.

6. Reinforcing assembly according to one of claims 1 to 5, further comprising a stop nut (8) placed on the element forming an anchor at the rear of the clevis.

7. Reinforcing assembly according to one of claims 1 to 6, further comprising at least a second clevis (15) with a similar structure identical to the first clevis, with first and second eyes (151, 152) each having an orifice centred on the axis A, one of these eyes being arranged substantially without any axial clearance between the first and second eyes (51, 52) of the first clevis (5).

8. Reinforcing assembly according to claim 7, in which the first clevis (5) and the second clevis (15) are offset angularly about the axis A.

9. Reinforcing assembly according to one of claims 1-8, in which the attachment element (7) is a nut with a spherical span.

10. Reinforcing assembly according to one of claims 1-9, in which the element forming an anchor is a geotechnical nail anchored in the foundation.

11. Clevis suitable for being used in a reinforcing assembly for a building structure, the clevis comprising a first eye (51) and a second eye (52) each having an orifice centred on an axis A, the two eyes being connected together by a body (53) with a roughly semi-circular shape, the first and second eyes (51, 52) each having an axial thickness E2 taken along axis A, **characterized in that** first and second eyes (51, 52) are separated axially by a distance E1 lying between E2 and 1.10 E2, so that, between the first and second eyes, an eye of another similar clevis may come to be interposed, with a minimal or zero clearance.

12. Clevis according to the preceding claim, in which the semi-circular body (53) has a cross section of diameter D3 that satisfies the relationship 0.75 E2 < D3 < E2.

13. Clevis according to one of claims 11-12, in which each of the eyes has a radial outside diameter D2 and the ratio D2/D1 is between 1.5 and 2.5.

14. Clevis according to one of claims 11-13, being symmetrical with respect to a midplane P perpendicular to the axis A, and in which the orifice of each eye has a frustoconical section (56) splaying in a direction directed opposite to the plane P.

15. Clevis according to one of claims 11-14, each of the eyes has a rim with a conical axial section (57) between the frustoconical section and the lateral face (45) directed towards the attachment element.

16. Method for building a structure in front of a foundation, in which a reinforcing assembly as described previously is assembled, the method comprising the following steps:
- inserting an element forming an anchor in the foundation, leaving an end portion (40) projecting,
- optionally placing a stop nut (8) on the projecting part of the element forming an anchor,
- passing at least one reinforcement (6) through the recess of a clevis (5) according to one of the claims 11 to 15, the clevis comprising first and second eyes (51, 52) connected together by a body (53) with a roughly curved shape, and next fitting the two eyes of said clevis, with the reinforcement thus arranged, on the end of the element forming an anchor,
- assembling an attachment element (7) on the end of the element forming an anchor.

17. Method according to the preceding claim, in which the end (40) of the element forming an anchor is threaded, and in which the attachment element is a draw nut (7), screwed on a threaded end portion.
